Europäisches Patentamt

European Patent Office

Office européen des brevets

(19)

(11) Veröffentlichungsnummer: **0 287 782 B1**

(12) **EUROPÄISCHE PATENTSCHRIFT**

(45) Veröffentlichungstag der Patentschrift: 30.10.91

(51) Int. Cl.⁵: **F16B 5/12, E06B 3/30**

(21) Anmeldenummer: 88103040.7

(22) Anmeldetag: 01.03.88

(54) Befestigungselement.

(30) Priorität: 22.04.87 DE 3713444

(43) Veröffentlichungstag der Anmeldung:
26.10.88 Patentblatt 88/43

(45) Bekanntmachung des Hinweises auf die
Patenterteilung:
30.10.91 Patentblatt 91/44

(84) Benannte Vertragsstaaten:
AT BE CH DE ES FR GB IT LI NL SE

(56) Entgegenhaltungen:
CH-A- 608 268
DE-A- 2 733 494
DE-C- 2 553 263
DE-U- 8 705 832

(73) Patentinhaber: **Hoogovens Aluminium Profiltechnik GmbH
Bergstrasse 17
7981 Vogt(DE)**

(72) Erfinder: **Küber, Emil
Rauhornweg 3 1/6
W-8966 Frauenzell(DE)**
Erfinder: **Diehm, Walter
Starenweg 15
W-7981 Vogt(DE)**
Erfinder: **Brillisauer, Josef
Sennereiweg 8
W-7962 Wolfegg(DE)**
Erfinder: **Veser, Xaver
Letze 30
W-7981 Vogt-Heissen(DE)**

(74) Vertreter: **Engelhardt, Guido, Dipl.-Ing.
Patentanwalt Montafonstrasse 35 Postfach
1350
W-7990 Friedrichshafen 1(DE)**

## Beschreibung

Die Erfindung bezieht sich auf eine Befestigungsanordnung eines Profils an einem Rahmen, insbesondere zur Befestigung eines Verkleidungsprofils an einem Holzrahmen, gemäß dem Oberbegriff des Anspruchs 1. Eine solche Anordnung ist durch CH-A-608268 bekannt.

Eine andere Anordnung ist durch die DE-PS 25 53 263 bekannt. Bei dieser Ausgestaltung ist an einem Schaft an dem in das Profil eingreifende Ende ein Bund angeformt, der nach einer Drehung die nach innen ragenden Stege des Profils hintergreift. Zur Sicherung gegen unbeabsichtigtes Lösen der Verbindung sind an dem Schaft gegenüber dem Bund versetzt angeordnete federnde Lappen angebracht, die in der Profilöffnung einrasten, so daß dadurch eine ungewollte Rückdrehung verhindert ist. Zur Demontage des Profils können die Befestigungselemente dennoch zurückgedreht werden, da die Lappen bei entsprechend großer Belastung zurückfedern.

Obwohl sich diese Anordnungen in der Praxis außerordentlich gut bewährt haben, ist der Zeitaufwand bei der Montage des zu befestigenden Profils beträchtlich, da nach dem Anbringen der Befestigungselemente und dem Aufsetzen des Profils jedes einzelne dieser Elemente mit Hilfe eines Schlüssels zu verdrehen ist, um mittels des Bundes die Schenkel der Profile zu arretieren.

Aufgabe der Erfindung ist es daher, eine Anordnung der vorgenannten Gattung zu schaffen, das nicht nur eine einfache Montage eines Profils in kurzer Zeit und eine sichere Halterung ermöglicht, ohne daß dabei die Befestigungselemente einzeln zu verdrehen sind, sondern das auch gegen Verdrehung gesichert ist und von dem das Profil im Bedarfsfall ohne Schwierigkeiten leicht abgenommen werden kann.

Gemäß der Erfindung wird dies durch die im kennzeichnenden Teil des Anspruch 1 genannten Merkmale erreicht.

Dazu ist vorgesehen, den Rastansatz des Befestigungselementes aus einer nach einer Seite abstehenden Rastnase oder aus zwei diametral einander gegenüberliegend angeordneten Rastnasen zu bilden, zwischen denen und der Grundplatte ein oder beide Stege des Profils gehalten sind und die Außenflächen der Rastnasen und/oder die dieser diametral gegenüberliegende Außenfläche des Rastansatzes mit einer Einführungsschräge zu versehen und zur Verdrehsicherung des Befestigungselementes die Grundplatte mit einem oder mehreren von dieser in Richtung des Profils abstehenden und in einem Randbereich der Aufnahmeöffnung des Profils angeordneten vorzugsweise kegelförmig ausgebildeten Nocken oder federnden Stegen auszustatten. Außerdem können die Außenfläche der Rastnase und/oder die dieser gegenüberliegende Außenfläche des Rastansatzes konvex gekrümmt ausgebildet werden.

Zum Ausgleich von Materialausdehnungen kann des weiteren die Bohrung des Befestigungselementes in Richtung der Rastnase oval ausgebildet sein.

Um eine sichere Verrastung des Profils, insbesondere bei einer Druckverglasung zu gewährleisten, ist es angebracht, die vorzugsweise rechteckig ausgebildete Grundplatte auf der der Rastnase zugekehrten Stirnfläche im Bereich des zu verspannenden Steges des Profils mit einer Freisparung zu versehen.

Des weiteren kann zur Erleichterung der Montage des zweckmäßigerweise aus einem schlagfesten Kunststoffmaterial herzustellenden Befestigungselementes die Grundplatte mit einer vorzugsweise mittig zu dem Rastansatz angeordneten Sichtmarkierung, beispielsweise in Form einer eingearbeiteten Kerbe, eines oder mehrerer angeformter Pfeile oder dgl. ausgestattet werden.

Das gemäß der Erfindung ausgebildete Befestigungselement ermöglicht es, ein Profil auf einfache Weise und in kurzer Zeit an einem Rahmen zu befestigen. Auch kann das Profil im Bedarfsfall leicht abgenommen werden, dennoch ist eine sichere Halterung gewährleistet. Wird nämlich das Befestigungselement aus einer die Aufnahmeöffnung des Profils überdeckenden Grundplatte und einem an diese angeformten Rastansatz gebildet, zwischen denen mindestens ein Steg des Profils gehalten ist, so kann das zu befestigende Profil nach dem Anbringen der Befestigungselemente an einem Rahmen auf diese leicht aufgerastet werden, ohne daß weitere Montagearbeiten notwendig sind. Zur Abnahme des Profils sind dagegen die Befestigungselemente um 90° zu verdrehen, damit die nach innen ragenden Stege des Profils über den Rastansatz abgehoben werden können. Das erfindungsgemäße Befestigungselement stellt somit einen Rast- und Drehhalter dar und ermöglicht eine sichere Halterung eines Profils an einem Rahmen sowie ein zerstörungsfreies Lösen dieser Verbindung ohne großen Bau- und Zeitaufwand.

In der Zeichnung ist ein Ausführungsbeispiels eines gemäß der Erfindung ausgebildeten Befestigungselementes zur Halterung eines Profils an einem Rahmen dargestellt, das nachfolgend im einzelnen erläutert ist. Hierbei zeigt:

Figur 1    ein an einem Flügelrahmen eines Fensters mittels Befestigungselementen angebrachtes Verkleidungsprofil,

Figur 2    das Befestigungselement nach Figur 1 in Draufsicht in vergrößerter Darstellung,

Figur 3    das Befestigungselement nach Figur 2 in Seitenansicht und

Figur 4 einen Schnitte nach der Linie IV - IV der Figur 2.

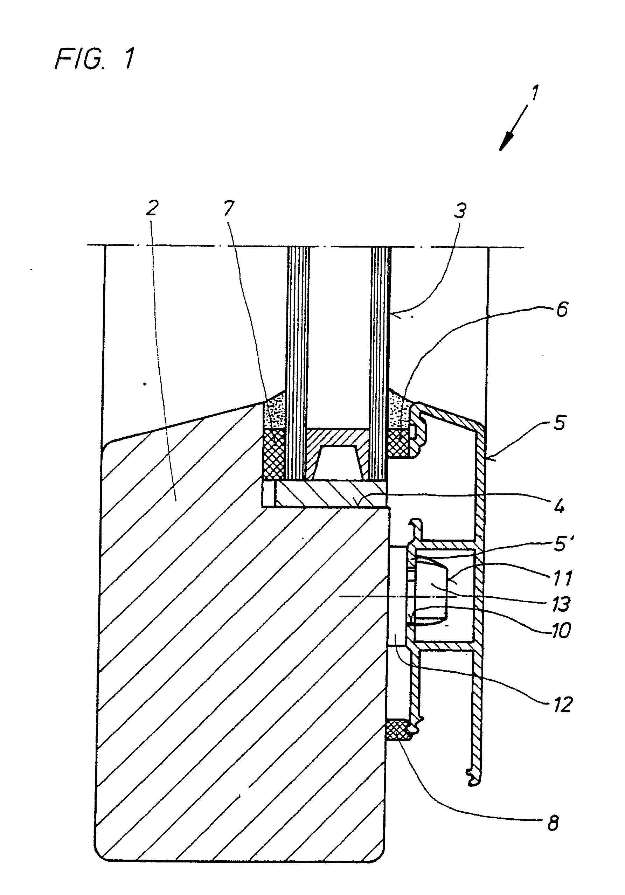

Bei dem in Figur 1 dargestellten und mit 1 bezeichneten Fenster sind an dessen Flügelrahmen 2, in dem in einem Glasfalz 4 eine Glasscheibe 3 eingesetzt ist, auf der Außenseite ein Abdeckprofil 5 angebracht, das mittels mit seitlichem Abstand zueinander angeordneter Befestigungselemente 11 gehalten ist. Das Profil 5 ist über Dichtungen 6 und 8 an der Glasscheibe 3 und dem Rahmen 2 abgestützt, außerdem ist auf der Innenseite zwischen diesem und der Glasscheibe 3 eine Dichtung 7 vorgesehen.

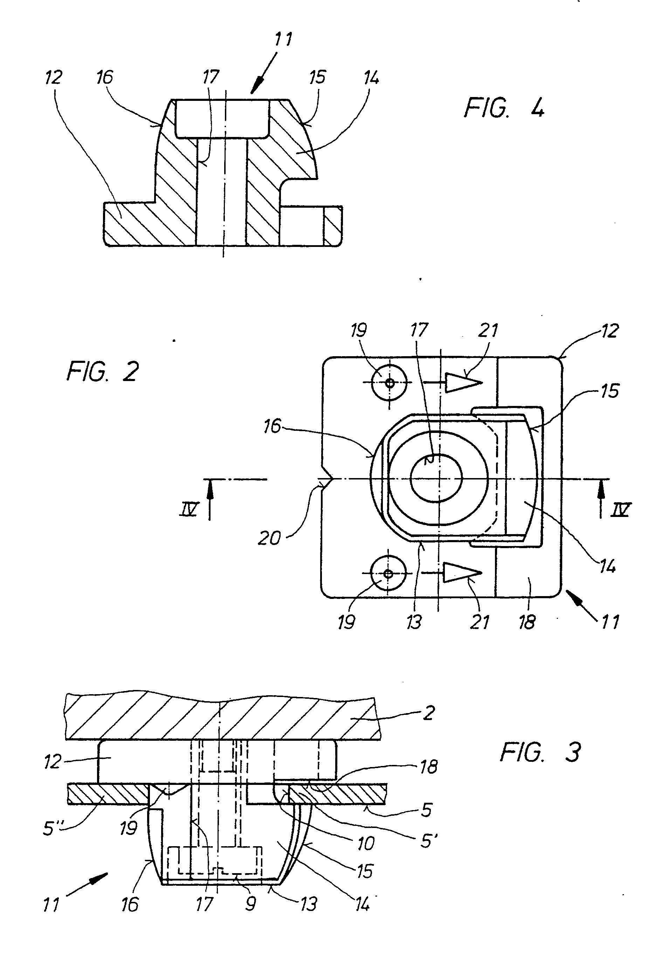

Das Befestigungselement 11, das mittels einer in einer Bohrung 17 eingesetzten Schraube 9 an dem Rahmen 2 befestigt ist, besteht, wie dies im einzelnen den Figuren 2 bis 4 zu entnehmen ist, aus einer Grundplatte 12 und einem an dieser angeformten Rastansatz 13, der mit einer Rastnase 14 versehen ist. Die Außenfläche 15 der Rastnase 14 wie auch die diametral gegenüberliegende Außenfläche 16 weisen hierbei eine Einführschräge auf, auch sind diese Flächen konvex gekrümmt. Das Profil 5, das eine die Befestigungselemente aufnehmende Profilöffnung 10 aufweist, kann demnach leicht auf den Rastansatz 13 aufgerastet werden. Dabei federn die nach innen gerichteten Stege 5' und 5" des Profils 5 auf, das Profil 5 ist über den Steg 5' somit sicher zwischen der Grundplatte 12 und dem Rastansatz 13 gehalten.

Um ein selbsttätiges Verdrehen der Befestigungselemente 11 auszuschließen, sind an der Grundplatte 12 zwei kegelförmig ausgebildete Nokken 19 angeformt, die ebenfalls in die Profilöffnung 10 hineinragen. Außerdem ist in die Grundplatte 12 zur Sichtkontrolle eine Kerbe 20 eingearbeitet und zusätzlich sind auf dieser zwei Pfeile 21 angebracht. Die Montage der Befestigungselemente 11, deren die Befestigungsschrauben 9 aufnehmende Bohrungen 17 zum Ausgleich von Materialausdehnungen des Profils 5 oval ausgebildet sind, wird auf diese Weise erleichtert. Und da des weiteren die Grundplatte 12 im Bereich der Rastnase 14 mit einer Freisparung 18 versehen ist, ist gewährleistet, daß der Schenkel 5' des Profils 5, und zwar auch bei Materialungenauigkeiten, stets sicher zwischen dem Rastansatz 13 und der Grundplatte 12 einrastet und daß bei einer Druckverglasung die vorgegebene Anpreßkraft eingehalten ist.

**Patentansprüche**

1. Befestigungsanordnung eines Profils (5) an einem Rahmen (2), insbesondere zur Befestigung eines Verkleidungsprofils (5) an einem Holzrahmen (2), mit einem in eine Öffnung (10) des Profils (5) eingesetzten und eine Verdrehsicherung aufweisenden Befestigungselement (11), das mittels einer eine zentrisch angeordnete Bohrung (17) durchgreifenden Schraube (9) drehbar an dem Rahmen (2) befestigt ist und aus einer die Breite der Öffnung (10) des Profils (5) überdeckenden Grundplatte (12) und einem an dieser angeformten Ansatz (13) mit im wesentlichen rechteckigem Querschnitt besteht, dessen schmalere Breite kleiner bemessen ist als die Breite der Profilöffnung und wobei zwischen dem Ansatz (13) und der Grundplatte (12) mindestens einer der Stege (5', 5") des Profils (5) gehalten ist,

**dadurch gekennzeichnet,**

daß das Profil (5) auf dem Ansatz (13) aufrastbar rastet ist, daß der Ansatz (13) durch eine nach einer Seite abstehende Rastnase (14) oder durch zwei diametral einander gegenüberliegend angeordnete Rastnasen gebildet ist, deren Außenflächen (15, 16) auf den Schmalseiten Einführschrägen aufweisen, und daß die Grundplatte (12) des Befestigungselementes (11) zur Verdrehsicherung mit einem oder mehreren von dieser in Richtung des Profils (5) abstehenden und in einem Randbereich der Aufnahmeöffnung (10) des Profils (5) angeordneten vorzugsweise kegelförmig ausgebildeten Nocken (19) oder federnden Stegen versehen ist.

2. Befestigungsanordnung nach Anspruch 1,

**dadurch gekennzeichnet,**

daß die Außenfläche (15) der Rastnase (14) und/oder die dieser gegenüberliegende Außenfläche (16) des Ansatzes (13) konvex gekrümmt ausgebildet sind.

3. Befestigungsanordnung nach Anspruch 1 oder 2,

**dadurch gekennzeichnet,**

daß die Bohrung (17) des Befestigungselementes (11) zum Ausgleich von Materialausdehnungen in Richtung der Rastnase (14) oval ausgebildet ist.

4. Befestigungsanordnung nach einem oder mehreren der Ansprüche 1 bis 3,

**dadurch gekennzeichnet,**

daß die vorzugsweise rechteckig ausgebildete Grundplatte (12) auf der der Rastnase (14) zugekehrten Stirnfläche im Bereich des zu verspannenden Steges (5') des Profils (5) mit einer Freisparung (18) versehen ist.

5. Befestigungsanordnung nach einem oder mehreren der Ansprüche 1 bis 4,

**dadurch gekennzeichnet,**

daß die Grundplatte (12) des Befestigungselementes (11) mit einer vorzugsweise mittig zu dem Ansatz (13) angeordneten Sichtmarkierung, beispielsweise in Form einer eingearbeiteten Kerbe (20), eines oder mehrerer angeformter Pfeile (21) oder dgl. versehen ist.

6. Befestigungsanordnung nach einem oder mehreren der Ansprüche 1 bis 5,

**dadurch gekennzeichnet,**

daß das Befestigungselement (11) aus einem schlagfesten Kunststoffmaterial hergestellt ist.

## Claims

1. Arrangement for fastening a profile (5) to a frame (2), notably for attaching a decorative profile (5) to a wooden frame (2), having a fastening element (11) with a securing feature located in an opening (10) in the profile (5) which, due to a screw (9) inserted through a centrally arranged bore (17), is able to rotate on the frame (2), said element comprising a base plate (12) extending around the width of the opening (10) in the profile (5) and incorporating a shaped projection (13) with, for the most part, a rectangular cross section, and having a narrower end which is less wide than the opening in the profile, whereby at least one of the webs (5', 5'') of the profile (5) is secured between the projection (13) and base plate (12),

**characterized in that**

the profile (5) can be located on the projection (13), furthermore in that the projection (13) is arranged as one laterally-offset locating lug (14) or as two diametrically-opposed locating lugs (14) whose outer faces (15, 16) have guide tapers on their narrowest side, and finally in that the base plate (12) of the fastening element (11), to prevent it from rotating, has one or more preferably bevel-shaped cams (19) or spring-loaded webs arranged along the edge of the spring-loaded webs arranged along the edge of the opening (10) in the profile (5), protruding from the base plate (12) towards the profile (5).

2. Fastening arrangement as claimed in claim 1,

**characterized in that**

the outer face (15) of the locating lug (14) and/or the diametrically-opposed outer face (16) of the projection (13) is/are arranged in a convex shape.

3. Fastening arrangement as claimed in claim 1 or 2,

**characterized in that**

the bore (17) in the fastening element (11) is arranged in an oval shape to compensate for any material distortion towards the locating lug (14).

4. Fastening arrangement as claimed in one or more of claims 1 to 3,

**characterized in that**

the base plate (12), preferably of a rectangular shape on the face presented to the locating lug (14) around the web (5') of the profile (5) which it has to secure, is arranged with a recess (18).

5. Fastening arrangement as claimed in one or more of claims 1 to 4,

**characterized in that**

the base plate (12) of the fastening element (11) is arranged with a visual marking, preferably centred on the projection (13) and which may take the form of a recessed notch (20), one or more protruding arrows (21) or some similar device.

6. Fastening arrangement as claimed in one or more of claims 1 to 5,

**characterized in that**

the fastening element (11) is manufactured from an impact-resistant plastic material.

## Revendications

1. Arrangement de fixation d'un profil (5) sur un cadre (2), notamment pour la fixation d'un profil de revêtement (5) sur un cadre en bois (2), à l'aide d'un élément de fixation (11) inséré dans une ouverture (10) du profil (5) et muni d'une protection anti-torsion, élément qui se laisse pivoter sur le cadre (2) par le moyen d'une vis (9) passant par un alésage centré (17) et qui se compose d'une plaque de base (12) recouvrant la largeur de l'ouverture (10) du profil (5) et d'un embout (13) formé sur cette plaque, à section essentiellement rectangulaire, dont le côté moins large est plus étroit que la largeur de l'ouverture du profil, avec intercalation d'au moins une des âmes (5', 5") du profil (5) entre l'embout (13) et la plaque de base (12),

se caractérisant par le fait que

que le profil (5) se laisse encliqueter dans l'embout (13), que l'embout (13) est formé par un nez d'encliquetage (14) saillant d'un côté ou par deux nez d'encliquetage diamétralement opposés dont les côtés étroits des surfaces extérieures (15, 16) portent des rampes d'introduction et que, pour la protection anti-torsion, la plaque de base (12) de l'élément de fixation (11) est équipée d'une ou de plusieurs cames (19) de préférence sous forme conique ou bien d'une ou de plusieurs âmes élastiques, saillant respectivement de la plaque en direction du profil (5) et disposées à l'endroit d'un bord de l'ouverture (10) du profil (5).

2. Arrangement de fixation d'après la revendication 1,

se caractérisant par le fait que

la surface extérieure (15) du nez d'encliquetage (14) et/ou la surface extérieure (16) de l'embout (13), opposée à celui-ci, sont conçues sous forme convexe.

3. Arrangement de fixation d'après les revendications 1 ou 2,

se caractérisant par le fait que

pour compenser des dilatations de matériel, l'alésage (17) de l'élément de fixation (11) est conçu sous forme ovale en direction du nez d'encliquetage (14).

4. Arrangement de fixation d'après une ou plusieurs des revendications 1 à 3,

se caractérisant par le fait que

sur la plaque de base de préférence rectangulaire (12), la face frontale orientée vers le nez d'encliquetage (14) est munie d'un évidement (18) à l'endroit de l'âme à serrer (5') du profil (5).

5. Arrangement de fixation d'après une ou plusieurs des revendications 1 à 4,

se caractérisant par le fait que

la plaque de base (12) de l'élément de fixation (11) est munie d'un repère de préférence centré par rapport à l'embout (13) et conçu par exemple en forme d'une entaille (20), d'une ou de plusieurs flèches (21) ou d'un marquage semblable.

6. Arrangement de fixation d'après une ou plusieurs des revendications 1 à 5,

se caractérisant par le fait que

l'élément de fixation (11) est construit en matériau synthétique résitant aux coups.

FIG. 1

FIG. 4

FIG. 2

FIG. 3